# EUROPÄISCHE PATENTSCHRIFT

(11) **EP 1 051 239 B1**
(45) Veröffentlichungstag und Bekanntmachung des Hinweises auf die Patenterteilung: **02.05.2002**
(21) Anmeldenummer: 98966582.3
(22) Anmeldetag: 24.12.1998
(51) Int. Cl.: B01J 3/03, B01J 3/04

(54) **MODELL-REAKTIONSDRUCKBEHÄLTER**
MODEL PRESSURIZED REACTION VESSEL
CUVE A REACTION MODELE SOUS PRESSION

(30) Priorität: 28.01.1998 DE 19803111
(43) Veröffentlichungstag der Anmeldung: 15.11.2000
(73) Patentinhaber: Seiffert, Volkhard, Dr.-Ing.,, 30880 Laatzen (DE); Ihlenfeld, Gerd, 30880 Laatzen (DE)
(72) Erfinder: Seiffert, Volkhard, Dr.-Ing.,, 30880 Laatzen (DE); Ihlenfeld, Gerd, 30880 Laatzen (DE)
(74) Vertreter: Bremer, Ulrich, Dipl.-Phys.
(86) Internationale Anmeldenummer: DE9803785
(87) Internationale Veröffentlichungsnummer: WO9938608

(56) Entgegenhaltungen:
- US-A- 2 647 656
- US-A- 2 971 671
- US-A- 4 670 404

## Beschreibung

Die Erfindung betrifft einen Modell-Reaktionsdruckbehälter aus Metall zur Durchführung chemischer Reaktionen bei verschiedenen Drücken mit einem becherförmigen Unterteil und einem aufgeschweißten Deckel sowie eine Reaktionsanordnung aus einem Autoklaven und einem in den Autoklaven eingesetzten derartigen Modell-Reaktionsdruckbehälter. Insbesondere betrifft die Erfindung einen solchen Reaktionsdruckbehälter der vorgenannten Art, der mit verschiedenen Einbauten und Deckelaufsätzen versehen ist und eine Drucknachführung, Zuleitung von Reagenzien sowie Temperaturmessung und Druckmessung im Reaktionsdruckbehälter ermöglicht.

Als Modell-Reaktionsbehälter im Labormaßstab für die Untersuchung chemischer Reaktionen weden üblicherweise zylinderförmige Metallbehälter eingesetzt. Bei den meisten Chemiefirmen werden derartige Modell-Reaktionsbehälter bevorzugt in einer standardisierten Größe von ca. 50 mm Durchmesser und gleich großer Höhe verwendet, um einheitliche Randbedingungen und damit vergleichbare Versuchbedingungen zu schaffen.

Die Modell-Reaktionsdruckbehälter dienen dabei zur Nachbildung von Reaktoren, die im großtechnischen Maßstab zur Durchführung chemischer Reaktionen verwendet werden. Bei derartigen Reaktoren für chemische Reaktionen werden chemische Rezepturen miteinander zur Reaktion gebracht, wobei sich bei der anschließenden Reaktion Drücke im Innenraum des Reaktors einstellen, die im allgemeinen von außen nur wenig beeinflußt werden können. Um derartige chemische Reaktionen im Modellmaßstab nachvollziehen zu können, müssen Modell-Reaktionsdruckbehälter mit einer relativ dünnen Wand verwendet werden, damit die Masse der Wand auf die chemischen Reaktionen, insbesondere auch die Temperatur der chemischen Reaktionen, einen möglichst geringen Einfluß hat. Bei der Verwendung von dünnen Wänden für den Modell-Reaktionsdruckbehälter kann jedoch im allgemeinen der in dem Reaktionsdruckbehälter entstehende Druck, der bei chemischen Reaktionen zum Teil sehr schnell ansteigen kann, nicht mehr aufgefangen werden. Daher werden derartige Modell-Reaktionsdruckbehälter in Autoklaven eingesetzt, so daß der Druckunterschied zwischen dem Innenraum des Modell-Reaktionsdruckbehälters und dem Innenraum des Autoklaven durch eine entsprechende Regelung des Drucks im Innenraum des Autoklaven gering gehalten werden kann. Somit wirken auf die Wände des Modell-Reaktionsdruckbehälters im allgemeinen nur kleinere Druckunterschiede ein. Da die Nachregelung des Drucks im Innenraum des Autoklaven mit der entsprechenden Regelabweichung und zeitlichen Verzögerung vorgenommen wird, kann im Innenraum des Modell-Reaktionsdruckbehälters auch ein Unterdruck gegenüber dem Innenraum des Autoklaven auftreten.

Zur Zeit werden Modell-Reaktionsdruckbehälter hergestellt, indem zunächst die zylindrische Wand aus Blech gebogen und längs stumpf verschweißt wird. Der Deckel und der Boden werden aus flachen Blechronden hergestellt, deren Rand hochgebördelt wird. Sie werden anschließend in den Blechzylinder eingesetzt und Bördel- oder Rollnahtverschweißt.

Dieser Fertigungsablauf hat mehrere Nachteile. Bei der Längsnaht und beim Bördelschweißen mit dem Lichtbogen-Schweißverfahren ist eine Zunderbildung im Behälterinneren nicht vermeidbar. Die Zunderschicht hat Einfluß auf die chemische Reaktion des Versuchsmediums und führt zu nichtreproduzierbaren Ergebnissen.

Zwischen dem Boden bzw. dem Deckel und der Seitenwand entsteht durch die Bördelung ein keilförmiger Totraum, der nach dem Befüllen des Behälters z.B. reaktionsfremde Gasreste einschließt. Ferner kann dieser Totraum zu unvollständiger Vermischung mehrerer nacheinander eingefüllter Reaktionspartner führen. Hieraus entsteht ein inhomogenes Mischungsverhältnis, das die Reaktion und damit die Meßergebnisse beeinträchtigt.

Darüber hinaus wird das thermodynamische Gleichgewicht durch das im Totraum eingeschlossene Gas als reaktionsfremde Komponente beeinflußt.

Der Totraum und die Zunderbildung sind insbesondere im Bodenbereich störend, da der Behälter aufrecht stehend eingesetzt wird und die Reaktionskomponenten hiermit direkt in Berührung kommen. Im Deckelbereich ist der störende Einfluß geringer.

Die zuvor genannte Zunderschicht, die beim Lichtbogen-Schweißverfahren im Behälterinnern entsteht, kann durch Anwendung des Rollnaht-Widerstandsschweißens zur Verbindung von Deckel und Boden mit der Zylinderwand zwar weitestgehend vermieden werden. Aufgrund des nicht zu unterschreitenden Mindestdurchmessers der Rollen des Schweißwerkzeugs können im Deckel jedoch erst nachträglich Rohrstutzen o.ä. angebracht werden, da diese sonst die Schweißrollen behindern. Dies bedeutet, daß die Rohrstutzen o.ä. nachträglich eingelötet werden müssen mit dem Nachteil, daß das Eindringen von Löt- und Flußmittelrückständen in den Behälter nicht zu vermeiden ist. Darüber hinaus ist das Lötmaterial steif und folgt unter Druckbelastung nicht den Bewegungen des elastischeren Metalls. Dies führt dazu, daß die Lötverbindung der Druckbelastung nur begrenzt standhält, insbesondere, daß die Lötverbindung durch die Druckschwankungen bei Betrieb ermüdet.

Von Anwenderseite besteht ein starkes Bedürfnis, die Bestükkung der Behälter mit Rohrstutzen und Verschraubungen möglichst individuell ausführen zu können. Auch diese Forderung ist durch die beschriebenen Fertigungsverfahren nicht erfüllbar. Die Rüstzeiten sind relativ hoch, so daß nur die jeweilige Fertigung einer größeren Stückzahl rentabel ist. Auch die Vorfertigung geschlosseneer Universalbehälter ist keine Lösung, da die Öffnungen für die Rohrstutzen und Verschraubungen später nur noch mittels Durchstechen des Deckels und damit nicht paßgenau gefertigt werden können. Die für das Verlöten beschriebenen Probleme werden weiter gesteigert und führen zu einem nichtkalkulierbaren Risiko bezüglich der Reproduzierbarkeit der Versuchsergebnisse.

Die Behälter werden, wegen der geforderten chemischen Passivität, bevorzugt aus Edelstahl gefertigt. Für Reaktionen mit besonders agressiven Soffen ist auch dieses Material, insbesondere bei Reaktionen, die über mehrere Stunden laufen, nicht ausreichend beständig. Es besteht daher der Wunsch, im Behälterinneren Beschichtungen aufzubringen, wie sie auch im Produktionsmaßstab in großen Reaktoren verwendet werden (z.B. Emaillierung). Dies ist bei vollständig verschweißten Behältern in der bekannten Form nachträglich nicht mehr möglich. Eine Beschichtung vor dem Schweißen bringt den Nachteil mit sich, daß die Beschichtung beim späteren Schweißen teilweise zerstört wird oder den großen Temperaturen nicht standhält, so daß Zersetzungsprodukte in den Behälterinnenraum gelangen können.

Die Aufgabe der Erfindung besteht darin, einen Reaktionsdruckbehälter bereitzustellen, der die geforderte Druckbeständigkeit besitzt und bei dem die oben beschriebenen im stande der Technik entstehenden Probleme weitestgehend vermieden werden.

Insbesondere soll ein Reaktionsdruckbehälter zur Verfügung gestellt werden, der als Reaktionsbehälter verwendet und hierfür auch bei kleineren Stückzahlen in wirtschaftlicher Weise individuell mit Deckeleinbauten und -aufsätzen bestückt werden kann.

Weiterhin soll eine Reaktionsanordnung aus einem Autoklaven und einem in den Autoklaven eingesetzten Modell-Reaktionsdruckbehälter geschaffen werden, bei dem die Probleme des Standes der Technik weitgehend vermieden werden.

Diese Aufgabe wird durch einen Modell-Reaktionsdruckbehälter nach Anspruch 1 gelöst.

Aufgrund des einteiligen Aufbaus des Unterteils werden alle Nachteile vermieden, die das Einschweißen des Bodens mit sich bringt. Dies sind im wesentlichen die Zunderschichten und der Totraum zwischen Boden und Behälterwand. Darüber hinaus ist die Druckfestigkeit bei einteiligem Aufbau deutlich höher. Somit kann ein Reaktionsdruckbehälter mit geringer Wandstärke ausgebildet werden, bei dem die Beeinflussung der chemischen Reaktionen durch die Wand des Reaktionsdruckbehälters gering gehalten werden kann.

Der Deckel wird auf das becherförmige Unterteil aufgeschweißt. Durch die spezielle erfindungsgemäße Form des Dekkels wird erreicht, daß die Zunderbildung beim Verschweißen des Deckels mit dem Unterteil sehr gering bleibt. Der Grund hierfür liegt darin, daß der Deckel mit dem Fügerand so in das Unterteil eingesetzt ist, daß der äußere Deckelrand parallel an der Seitenwand des Unterteils anliegt. Da die Schweißnaht nur den äußeren Rand von Deckel und becherförmigem Unterteil verbindet, wird die Schweißnaht durch die aneinanderliegenden Bereiche von Deckelrand und Unterteil gestützt.

Ein weiterer Vorteil der erfindungsgemäßen Ausbildung des Deckels besteht darin, daß die Schweißnaht zwischen Deckel und Unterteil weitgehend von Biegekräften freigehalten wird, wenn der Druckbehälter mit hohem Über- oder Unterdruck beaufschlagt wird. Bei hohem Überdruck beispielsweise wölbt sich der Deckel des Reaktionsdruckbehälters nach außen oder der ganze Behälter weitet sich "ballonartig" auf. Unter diesen Bedingungen wird eine in üblicher Weise angesetzte Schweißnaht hohen Biegekräften ausgesetzt. Dies wird bei der erfindungsgemäß vorgeschlagenen Formgebung am Deckelrand vermieden, wodurch die Druckstabilität erheblich gesteigert werden kann.

Zum Verschweißen von Deckel und Unterteil am jeweils äußeren Rand kann vorteilhaft anstelle des sonst üblichen Lichtbogenschweißens das Laserschweißverfahren eingesetzt werden. Hierdurch kann eine sehr schmale, gleichzeitig aber stabile Schweißnaht erhalten werden, und eine Zunderbildung im Behälterinnern kann weitestgehend vermieden werden.

Vorzugsweise wird ein zusätzlicher Stützring um das becherförmige Unterteil heraum an dessen Oberkante auf Höhe des deckels aufgesetzt. Der Stützring wird so angeordnet, daß er vom Unterteil aus betrachtet dem Deckelrand genau gegenüber liegt. Die Ober- bzw. Außenkanten des Stürzrings, des Unterteils sowie des Deckels berühren sich und werden in dieser Position verschweißt.

Der Stützring verleiht der Schweißnaht zusätzliche Stabilität. Dies kann insbesondere dann erwünscht sein, wenn der Behälter möglichst dünnwandig ausgebildet werden soll. Wenn das becherförmige Unterteil, wie in einem bevorzugten Ausführungsbeispiel, tiefgezogen hergestellt ist, ist die Materialstärke am Boden des Unterteils größer als in der Seitenwandung. Die dann sehr dünne Seitenwandung wird durch den Stützring auf Höhe der Schweißnaht verstärkt. Der in gleicher Dicke wie der Deckel ausgeführte Stützring dient beim druckdichten Verschweißen des dünnwandigen Behälters zudem als Schweizusatzwerkstoff.

In Weiterbildung der Erfindung kann zwischen Deckel und Unterteil vor dem Zusammenbau ein chemisch passives Dichtungsmittel aufgebracht werden, das nach der Montage den Totraum im unteren Bereich des Fügerandes ausfüllt. Durch die relativ geringe Energieeinbringung beim Laserschweißen wird das Dichtmittel nicht geschädigt.

Der Deckel kann vorzugsweise mit einer oder mehreren Kehlen ausgeführt werden. Der Vorteil dieser erfindungsgemäßen Ausbildung des Deckels besteht darin, daß die Schweißnaht zwischen Deckel und Unterteil noch weiter von Biegekräften freigehalten wird, wenn der Reaktionsdruckbehälter mit Über- oder Unterdruck beaufschlagt wird. Bei hohem Überdruck beispielsweise wölbt sich der Deckel des Druckbehälters nach außen.

Unter diesen Bedingungen wird eine in üblicher Weise angesetzte Schweißnaht hohen Biegekräften ausgesetzt. Dies wird bereits durch die erfindunsgemäße Formgebung noch besser jedoch durch tiefgezogene Kehlen vermieden, wodurch die Druckstabilität erheblich gesteigert werden kann.

Der Reaktionstruckbehälter ist aus Metall, aus Kostengeründen kommen hierfür, insbesondere Stahl und Edelstahl in Betracht.

Um die individuelle Bestückung des Reaktionsdruckbehälters als Modellreaktor mit Deckeleinbauten zu ermöglichen, ist in Weiterbildung der Erfindung vorgesehen, daß der Deckel mit Aushalsungen versehen bzw. mit Schweißhülsen bestückt wird, die durch entsprechende Bohrungen geführt sind. In die Aushalsungen bzw. Schweißhülsen können Einsätze, wie Rohrstutzen oder ähnliches, eingesetzt sein, die an deren Rand mit einer flachen Naht verschweißt werden können. Durch die Aushalsungen bzw. Schweißhülsen wird vermieden, daß die zugehörigen Einsätze in Deckeldurchlässe eingelötet werden müssen. Diese erfindungsgemäße Ausgestaltung vermeidet die genannten Nachteile einer Lötverbindung. Das Schweißen bietet eine wesentlich höhere Festigkeit und Korrosionsbeständigkeit für den Einsatz der Deckeleinbauten.

Vorteilhaft bei der Erfindung ist, daß die Grundbauteile - Unterteil, Deckel und ggfs. Stützring - für alle Anwendungsfälle identisch sind und deshalb in großen Stückzahlen kostengünstig vorproduziert werden können. Die Bestückung des Deckels, z.B. mit Schweißhülsen, Rohrstutzen, Verschraubungen usw., kann ohne erhöhten Kostenaufwand für jede Anwendung individuell erfolgen.

Sofern es erwünscht ist, kann das Unterteil wenigstens teilweise mit einer Auskleidung versehen sein. Besonders bei Kontakt mit agressiven Flüssigkeiten können die fluidberührten Bereiche durch Auskleidungen geschützt werden. Hierfür kommen z.B. Emaillierungen oder verschiedene synthetische Beschichtungen in Frage.

Für spezielle Anwendungen, insbesondere bei hochagressiven Fluiden kanan in das Unterteil vor dem Verschließen und Laserschweißen zusätzlich ein Einsatzbehälter - ein sogenannter Inliner - eingesetzt werden, der vorzugsweise aus Gals oder Keramik besteht. Darüber hinaus können die fluidberührten Einbauten, wie z.B. Rohrstutzen, zu ihrem Schutz mit einer chemisch passiven Beschichtung versehen werden.

Wenn ein Inliner vorgesehen ist, ist es vorteilhaft, den Deckel des Reaktionsdruckbehälters mit einer Mitnehmernase zu versehen, die an dem Inliner so angreift, daß dieser nicht innerhalb des Unterteils verschoben werden kann.

Das Unterteil kann mit Einbauten oder Einsätzen bestückt sein, z.B. mit Trennwänden, Siebböden, Rührern usw. Hierdurch wird das Feld der darstellbaren Reaktortypen deutlich erweitert.

Im folgenden wird die Erfindung anhand einiger Ausführungsbeispiele näher erläutert:

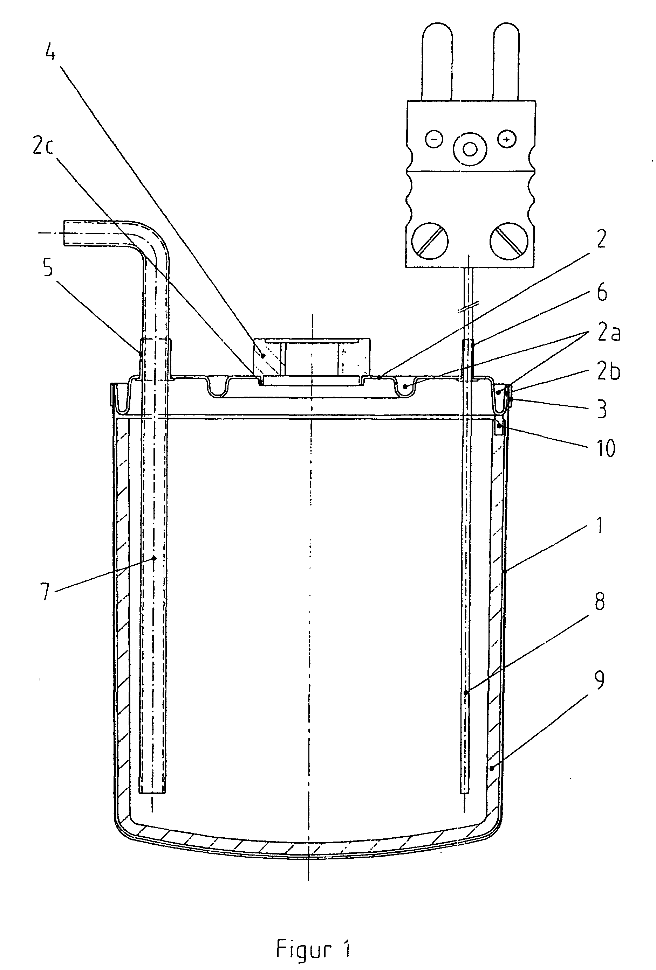

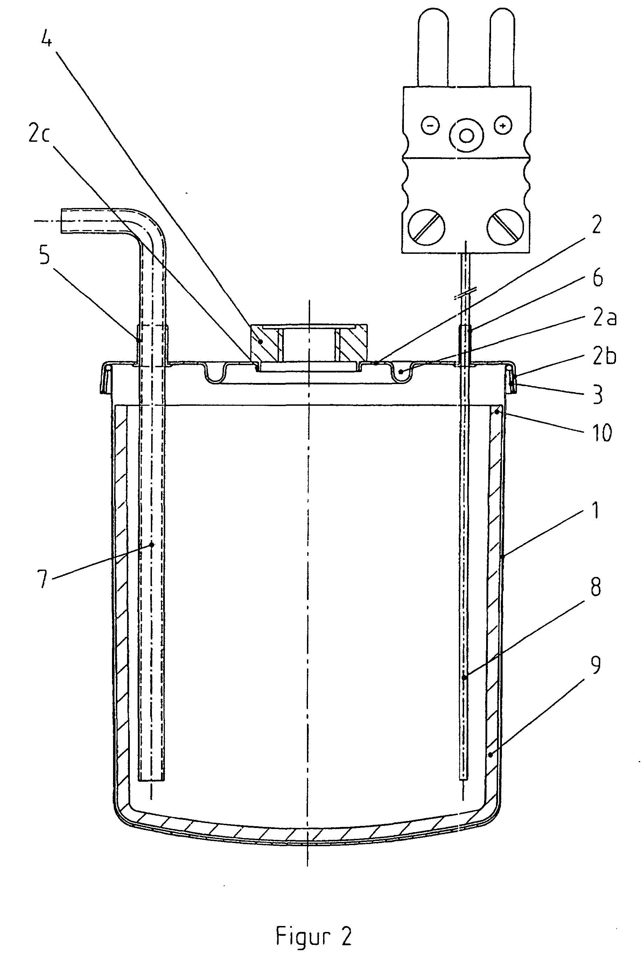

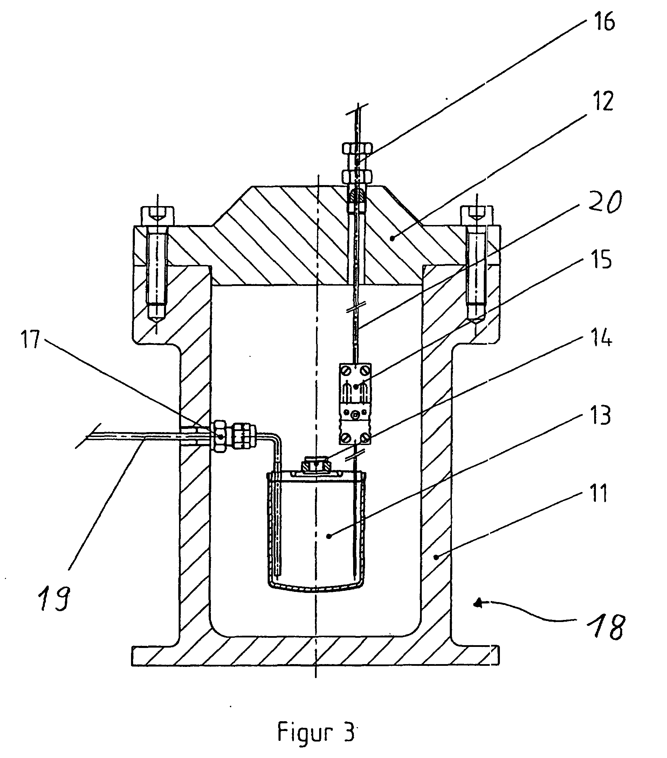

Figur 1 zeigt einen Reaktionsdruckbehälter in Form eines Modellreaktors, der aus einem Unterteil 1, einem Deckel 2 mit Fügerand und einem Stützring 3 als Grundkomponenten besteht. Figur 2 zeigt ein anderes Ausführungsbeispiel des Reaktionsdruckbehälters mit aufgesetztem Deckel 2. Figur 3 zeigt eine erfindungsgemäße Reaktionsanordnung zur modellhaften Nachbildung von chemischen Reaktionen mit einem Autoklaven und einem Reaktionsdruckbehälter.

Die in den Figuren 1 und 2 dargestellten Ausführungsbeispiele sind mit einer Verschraubung 4, sowie Schweißhülsen 5 und 6 ausgestattet. Durch die Schweißhülse 5 ist ein Rohrstutzen 7 geführt, der am oderen Rand der Schweißhülse 5 mit einer flachen Schweißnaht eingeführt ist. Durch die Schweißhülse 6 ist ein ebenso eingeschweißtes Thermoelement 8 geführt. Die Reaktionsdruckbehälter sind weiter mit einem Inliner 9 aus Glas oder Keramik ausgestattet. An dem Deckel 2 it eine Mitnehmernase 10 angebracht, die so in den Inliner eingreift, daß sich dieser nicht innerhalb des Unterteils 1 verschieben kann. Die Verschraubung 4 ist mit der Aushalsung 2c des Deckels verschweißt.

Über den Rohrstutzen 7 und die Verschraubung 4 können die Reaktionspartner zugegeben bzw. zudosiert werden. Wenn besonders agressive Reaktionspartner eingesetzt werden, kann es auch vorteilhaft sein, den Rohrstutzen 7 an seinem unteren fluidberührten Ende aus Keramik oder Glas oder einem ähnlichen inerten Material auszubilden.

Während des Versuchsbetriebs wird der Behälter im allgemeinen in einen Autoklaven eingesetzt, wo er durch außenliegende Heizleiter temperiert wird. Der Druckbehälter selbst soll eine Druckfestigkeit von mehreren bar besitzen; höhere Druckdifferenzen werden durch regelung des Drucks im Autoklaven kompensiert.

Während des Einsatzes im Autoklaven werden weitere Reaktionskomponenten über die Rohrstutzen 7 zugeführt. Anders als in den dargestellten Ausführungsbeispielen können auch mehrere rohrstutzen 7 vorgesehen sein, über die ggfs. auch Reaktionsprodukte abzogegen werden können. Das Thermoelement 8 dient zur Aufzeichnung des thermischen Reaktionsverlaufs.

Der Deckel 2 des in Figur 1 dargestellten Druckbehälters ist mit zwei umlaufenden Kehlen 2a ausgestattet, und zwar an seiner äußeren Kante sowie um die Verschraubung 4 herum. Unterhalb der Verschraubung 4 ist die Aushalsung 2c dargestellt.

In Figur 2 ist der Deckel 2 auf das Unterteil aufgesetzt. Hierdurch entfällt die in dem Beispiel gemäß Figur 1 am äußeren Rand verlaufende Kehle und der Deckel wird ausschließlich durch die Kehle um die Verschraubung 4 stabilisiert.

In beiden dargestellten Beispielen hat das tiefgezogene becherförmige Unterteil 1 in seinem Bodenbereich eine Wandstärke von 0,3 mm, während die Seitenwand eine Wandstärke von nur etwa 0,15 mm besitzt. Der Deckel hat eine Wandstärke von 0,3 mm, ebenso wie der Stützring. Die umlaufende Kehle 2a ist ca. 3-5 mm tief, so daß der äußere Deckelrand 2b in dem Bereich, der parallel an das Unterteil 1 anliegt, ca. 3 mm breit ist. In alternativen Ausführungsbeispielen kann der Modellreaktor mit weiteren oder anderen Einbauten und Einsätzen ausgestattet sein.

Gemäß Figur 3 wird der erfindungsgemäße Modell-Reaktionsdruckbehälter 13 in einen Autoklaven 18 eingesetzt. Der Autoklav 18 weist ein Unterteil 11 und einen Deckel 12 auf, die miteinander verschraubt sind. Der Modell-Reaktionsdruckbehälter ist mit einer Schraube 14 verschlossen. Das Thermoelement des Reaktionsdruckbehälters ist über eine Kupplung 15, eine Leitung 20 und eine Verschraubung 16, die eine druckfeste Abdichtung des Innenraum des Autoklaven bewirkt, mit dem Außenraum verbunden, so daß die Temperatur über die Leitung 20 von außen gemessen werden kann. Der in dem Modell-Reaktionsdruckbehälter gemäß den Figuren 1, 2 befindliche Rohrstutzen 7 ist gemäß Figur 3 über eine Rohrleitung 19 mit dem Außenraum verbunden. Die Rohrleitung 19 ist über eine Verschraubung 17 druckdicht aus dem Autoklaven herausgeführt. Über die Rohrleitung 19 kann zum einen der Druck im Innenraum des Reaktionsdruckbehälters 13 gemessen werden und/oder es können Reagenzien in den Innenraum des Reaktionsdruckbehälters 13 geführt werden. Diese Reagenzien können Ausgangsmaterialien für die chemischen Reaktionen oder auch Reaktionsbeschleuniger oder Reaktionshemmer sein.

## Patentansprüche

1. Modell-Reaktionsdruckbehälter aus Metall zur Duchführung chemischer Reaktionen, bei verschiedenen Drücken, mit einem becherförmigen Unterteil (1) und einem aufgeschweißten Deckel (2), wobei der äußere Deckelrand (2b) als Fiigerand parallel zum äußeren Rand des becherförmigen Unterteils verlaufend ausgebildet ist und daß der Deckel (2) und das becherförmige Unterteil (1) nur am äußeren Rand verschweißt sind, **dadurch gekennzeichnet, daß** das becherförmige Unterteil (1) einteilig ausgebildet ist.

2. Modell-Reaktionsdruckbehälter nach Anspruch 1, **dadurch gekennzeichnet, daß** um das becherförmige Unterteil (1) herum ein Stützring (3) aufgesetzt ist, der vom Unterteil (1) aus gesehen dem Deckelrand (2b) gegenüber liegt, wobei der Deckelrand (2b), Unterteil (1) und Stützring (3) zusammen verschweißt sind.

3. Modell-Reaktionsdruckbehälter nach Anspruch 1 oder 2, **dadurch gekennzeichnet, daß** der Deckel (2) mit einer oder mehreren konzentrisch umlaufenden Kehlen ausgestattet ist.

4. Modell-Reaktionsdruckbehälter nach einem der Ansprüche 1 bis 3, **dadurch gekennzeichnet, daß** der Deckel (2) mit Aushalsungen (2c) bestückt ist.

5. Modell-Reaktionsdruckbehälter nach einem der Ansprüche 1 bis 3, **dadurch gekennzeichnet, daß** der Deckel (2) mit Schweißhülsen (5, 6) bestückt ist.

6. Modell-Reaktionsdruckbehälter nach Anspruch 4 oder 5, **dadurch gekennzeichnet, daß** in die Aushalsungen oder Schweißhülsen Einsätze, wie Verschraubungen (4), Rohrstutzen (7) oder ähnliches, eingesetzt sind, die mit den Aushalsungen oder Schweißhülsen verschweißt sind.

7. Modell-Reaktionsdruckbehälter nach Anspruch 6, **dadurch gekennzeichnet, daß** die Einsätze, wie Verschraubungen (4), Rohrstutzen (7) oder ähnliches, wenigstens in ihrem unteren, fluidberührten Teil mit einer chemisch passiven Beschichtung versehen sind.

8. Modell-Reaktionsdruckbehälter nach einem der Ansprüche 1 bis 7, **dadurch gekennzeichnet, daß** das Unterteil (1) wenigstens teilweise mit einer Auskleidung versehen ist.

9. Modell-Reaktionsdruckbehälter nach einem der Ansprüche 1 bis 8, **dadurch gekennzeichnet, daß** im Bereich der Verbindung zwischen Deckel und Unterteil ein chemisch passives Dichtungsmittel aufgebracht ist.

10. Modell-Reaktionsdruckbehälter nach einem der Ansprüche 1 bis 9, **dadurch gekennzeichnet, daß** in das Unterteil (1) ein Einsatzbehälter (Inliner (9)), vorzugsweise aus Glas oder Keramik, eingesetzt ist.

11. Modell-Reaktionsdruckbehälter nach Anspruch 10, **dadurch gekennzeichnet, daß** der Deckel (2) mit einer Mitnehmernase (10) versehen ist, die an dem Inliner (9) so angreift, daß sich dieser nicht innerhalb des Unterteils (1) verschieben kann.

12. Modell-Reaktionsdruckbehälter nach einem der Ansprüche 1 bis 11, **dadurch gekennzeichnet, daß** das Unterteil (1) mit Einbauten oder Einsätzen bestückt ist.

13. Modell-Reaktionsdruckbehälter nach einem der Ansprüche 1 bis 12, **dadurch gekennzeichnet, daß** er im Überdruckbereich und Unterdruckbereich verwendbar ist.

14. Reaktionsanordnung zur Durchführung chemischer Reaktionen bei verschiedenen Drücken, mit einem Autoklaven (18) und einem in den Autoklaven eingesetzten Modell-Reaktionsdruckbehälter (13) nach einem der Ansprüche 1 bis 13.

15. Reaktionsanordnung nach Anspruch 13, **dadurch gekennzeichnet, daß** eine Rohrleitung (19) zur Zuführung von Materialien und/oder Messung des Drucks im Innenraum des Modell-Reaktionsdruckbehälters (13) von außen durch den Autoklaven (18) in den Modell-Reaktionsdruckbehälter (13) verläuft.

16. Reaktionsanordnung nach Anspruch 14 oder 15, **dadurch gekennzeichnet, daß** ein Thermoelement (8) im Innenraum des Modell-Reaktionsdruckbehälters (13) mit einer elektrischen Leitung (20) verbunden ist, die durch den Autoklaven (18) nach außen verläuft.

17. Reaktionsanordnung nach einem der Ansprüche 14 bis 16, **dadurch gekennzeichnet, daß** der Druck im Innenraum des Autoklaven (18) in Abhängigkeit von dem gemessenen Druck im Innenraum des Modell-Reaktionsdruckbehälters (13) regelbar ist derartig, daß ein Druckunterschied zwischen dem Innenraum des Autoklaven (18) und dem Innenraum des Modell-Reaktionsdruckbehälters (13) gering gehalten wird.

## Claims

1. Model reaction pressure vessel made of metal for effecting chemical reactions, at various pressures, comprising a beaker-shaped bottom part (1) and a welded-on lid (2), wherein the outer lid rim (2b) takes the form of a jointing rim extending parallel to the outer rim of the beaker-shaped bottom part and that the lid (2) and the beaker-shaped bottom part (1) are welded together only at the outer rim,
**characterized in that** the beaker-shaped bottom part (1) is of a one-piece construction.

2. Model reaction pressure vessel according to claim 1, **characterized in that** mounted around the beaker-shaped bottom part (1) is a bearing ring (3) which, viewed from the direction of the bottom part (1), lies opposite the lid rim (2b), wherein the lid rim (2b), bottom part (1) and bearing ring (3) are welded together.

3. Model reaction pressure vessel according to claim 1 or 2, **characterized in that** the lid (2) is provided with one or more concentric annular channels.

4. Model reaction pressure vessel according to one of claims 1 to 3, **characterized in that** the lid (2) is equipped with necked-out portions (2c).

5. Model reaction pressure vessel according to one of claims 1 to 3, **characterized in that** the lid (2) is equipped with welding sleeves (5, 6).

6. Model reaction pressure vessel according to claim 4 or 5, **characterized in that** inserted into the necked-out portions or welding sleeves are inserts, such as screw fittings (4), pipe sockets (7) or the like, which are welded to the necked-out portions or welding sleeves.

7. Model reaction pressure vessel according to claim 6, **characterized in that** the inserts, such as screw fittings (4), pipe sockets (7) or the like, are provided with a chemically passive coating at least in their lower part, which is in contact with fluid.

8. Model reaction pressure vessel according to one of claims 1 to 7, **characterized in that** the bottom part (1) is at least partially provided with a lining.

9. Model reaction pressure vessel according to one of claims 1 to 8, **characterized in that** a chemically passive sealing means is provided in the region of the join between lid and bottom part.

10. Model reaction pressure vessel according to one of claims 1 to 9, **characterized in that** inserted into the bottom part (1) is an insertion container (inliner (9)), preferably made of glass or ceramic material.

11. Model reaction pressure container according to claim 10, **characterized in that** the lid (2) is provided with a driving lug (10), which acts upon the inliner (9) in such a way that the latter is non-displaceable inside the bottom part (1).

12. Model reaction pressure vessel according to one of claims 1 to 11, **characterized in that** the bottom part (1) is equipped with built-in components or inserts.

13. Model reaction pressure vessel according to one of claims 1 to 12, **characterized in that** it is usable in the pressure ranges above and below atmospheric pressure.

14. Reaction arrangement for effecting chemical reactions at various pressures, comprising an autoclave (18) and a model reaction pressure vessel (13) according to one of claims 1 to 13, which is inserted into the autoclave.

15. Reaction arrangement according to claim 13, **characterized in that** a pipe (19) for feeding materials and/or measuring the pressure in the interior of the model reaction pressure vessel (13) extends from outside through the autoclave (18) into the model reaction pressure vessel (13).

16. Reaction arrangement according to claim 14 or 15, **characterized in that** a thermoelement (8) in the interior of the model reaction pressure vessel (13) is connected to an electric line (20), which extends through the autoclave (18) in an outward direction.

17. Reaction arrangement according to one of claims 14 to 16, **characterized in that** the pressure in the interior of the autoclave (18) is controllable in dependence upon the measured pressure in the interior of the model reaction pressure vessel (13) in such a way that a pressure difference between the interior of the autoclave (18) and the interior of the model reaction pressure vessel (13) is kept low.

## Revendications

1. Cuve à réaction modèle sous pression en métal pour effectuer des réactions chimiques sous différentes pressions, comprenant une partie inférieure (1) en forme de coupelle, et un couvercle (2) soudé sur celle-ci, le bord extérieur (2b) du couvercle étant réalisé en tant que bord de jointure s'étendant parallèlement au bord extérieur de la partie inférieure en forme de coupelle, le couvercle (2) et la partie inférieure en forme de coupelle (1) n'étant soudés qu'au bord extérieur, **caractérisée en ce que** la partie inférieure en forme de coupelle (1) est réalisée d'une seule pièce.

2. Cuve à réaction modèle sous pression selon la revendication 1, **caractérisée en ce qu'**un anneau de soutien (3) est monté sur le pourtour de la partie inférieure (1) en forme de coupelle, cet anneau étant situé à l'opposé du bord (2b) du couvercle par rapport à la partie inférieure (1), et **en ce que** le bord du couvercle (2b), la partie inférieure (1) et l'anneau de soutien (3) sont soudés ensemble.

3. Cuve à réaction modèle sous pression selon la revendication 1 ou 2, **caractérisée en ce que** le couvercle (2) est pourvu d'une ou plusieurs gorges périphériques concentriques.

4. Cuve à réaction modèle sous pression selon l'une des revendications 1 à 3, **caractérisée en ce que** le couvercle (2) est muni de cols (2c).

5. Cuve à réaction modèle sous pression selon l'une des revendications 1 à 3, **caractérisée en ce que** le couvercle (2) est muni de manchons de soudage (5, 6).

6. Cuve à réaction modèle sous pression selon la revendication 4 ou 5, **caractérisée en ce que** dans les cols ou manchons de soudage sont insérés des inserts, tels que des pièces filetées, des raccords tubulaires (7) ou analogues, qui sont soudés avec les cols ou manchons de soudage.

7. Cuve à réaction modèle sous pression selon la revendication 6, **caractérisée en ce qu'**au moins dans leur partie inférieure en contact avec le fluide les inserts tels que pièces filetées (4), raccords filetés (7) ou analogues, sont munis d'une couche chimiquement passive.

8. Cuve à réaction modèle sous pression selon l'une des revendications 1 à 7, **caractérisée en ce que** la partie inférieure (1) est au moins en partie munie d'un revêtement.

9. Cuve à réaction modèle sous pression selon l'une des revendications 1 à 8, **caractérisée en ce qu'**un moyen d'étanchéité chimiquement passif est rapporté dans la zone de la liaison entre le couvercle et la partie inférieure.

10. Cuve à réaction modèle sous pression selon l'une des revendications 1 à 9, **caractérisée en ce qu'**une cuve d'insertion (Inliner (9)), de préférence en verre ou céramique, est insérée dans la partie inférieure (1).

11. Cuve à réaction modèle sous pression selon la revendication 10, **caractérisée en ce que** le couvercle (2) est muni d'un bec d'entraînement (10) qui vient en prise avec l'Inliner (9) de telle manière que celui-ci ne peut pas se déplacer à l'intérieur de la partie inférieure (1).

12. Cuve à réaction modèle sous pression selon l'une des revendications 1 à 11, **caractérisée en ce que** la partie inférieure (1) est équipée de moyens installés ou d'inserts.

13. Cuve à réaction modèle sous pression selon l'une des revendications 1 à 12, **caractérisée en ce qu'**elle est utilisable dans le domaine des surpressions et dans le domaine des dépressions.

14. Agencement de réaction pour effectuer des réactions chimiques sous différentes pressions, comprenant un autoclave (18) et une cuve à réaction modèle sous pression (13) selon l'une des revendications 1 à 13, installée dans l'autoclave.

15. Agencement de réaction selon la revendication 14, **caractérisé en ce qu'**une tuyauterie (19) pour l'acheminement de matériaux et/ou la mesure de pression à l'intérieur de la cuve à réaction modèle sous pression (13) s'étend de l'extérieur, à travers l'autoclave (18) et jusque dans la cuve à réaction modèle sous pression (13).

16. Agencement de réaction selon la revendication 14 ou 15, **caractérisé en ce qu'**un thermo-élément (8) est relié avec une ligne électrique (20) à l'intérieur de la cuve à réaction modèle sous pression (13), la ligne électrique allant vers l'extérieur à travers l'autoclave (18).

17. Agencement de réaction selon l'une des revendications 14 à 16, **caractérisé en ce que** la pression à l'intérieur de l'autoclave (18) peut être régulée en fonction de la pression mesurée à l'intérieur de la cuve à réaction modèle sous pression (13) de façon à maintenir réduite une différence de pression entre l'intérieur de l'autoclave (18) et l'intérieur de la cuve à réaction modèle sous pression.
